(19) Europäisches Patentamt
European Patent Office
Office européen des brevets

(11) **EP 1 713 853 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **05701255.1**

(22) Anmeldetag: **29.01.2005**

(51) Int Cl.:
*C08J 7/04* (2006.01)     *A61F 13/00* (2006.01)
*C09D 201/00* (2006.01)   *C09D 133/00* (2006.01)
*D06N 3/04* (2006.01)     *E21D 11/38* (2006.01)
*B32B 27/04* (2006.01)    *D06M 15/263* (2006.01)
*D03D 1/00* (2006.01)     *E02B 3/16* (2006.01)
*E04B 1/68* (2006.01)

(86) Internationale Anmeldenummer:
**PCT/EP2005/000897**

(87) Internationale Veröffentlichungsnummer:
**WO 2005/075544 (18.08.2005 Gazette 2005/33)**

(54) **VERFAHREN ZUR HERSTELLUNG ABSORBIERENDER VERBUNDSTOFFE**

METHOD FOR PRODUCING ABSORBENT COMPOSITE MATERIALS

PROCEDE DE PRODUCTION DE MATERIAUX COMPOSITES ABSORBANTS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.02.2004 DE 102004005418**

(43) Veröffentlichungstag der Anmeldung:
**25.10.2006 Patentblatt 2006/43**

(73) Patentinhaber: **BASF SE**
**67056 Ludwigshafen (DE)**

(72) Erfinder:
• WEBER, Manfred
  68199 Mannheim (DE)
• STEINMETZ, Bernhard
  97535 Rütschenhausen (DE)
• WEIDL, Christian, Hubert
  68167 Mannheim (DE)
• LÖSCH, Dennis
  67122 Altrip (DE)
• FRENZ, Volker
  67317 Altleiningen (DE)
• MOSSBACH, Ralf
  67473 Lindenberg (DE)

(56) Entgegenhaltungen:
EP-A- 0 357 474     EP-A- 0 885 906
EP-A- 1 396 573     WO-A-92/08835
GB-A- 2 057 514     US-A- 3 666 400
US-A- 4 721 647

EP 1 713 853 B1

**Beschreibung**

Die vorliegende Erfindung betrifft ein Verfahren zur Herstellung absorbierender Verbundstoffe durch in Kontakt bringen eines festenTrägermaterials mit einer Mischung enthaltend mindestens ein polymeres Material und mindestens einen Vernetzer und Aushärten der Mischung auf dem Trägermaterial.

In vielen Bereichen des Bauwesens sind Abdichtungen der Bauwerke gegen eindringendes Tag-, Grund-, Schichten- oder Sickerwasser erforderlich. Zu diesem Zweck verwendet man beispielsweise Bitumenschweißbahnen (US-A-2,015,102, US-A-2,160,342) Kunststoffdichtungen (DE-A-199 30 701), Schaumstoffbänder (DE-A-2819 604, DE-B-12 23 407) oder Tondichtungsbahnen zum Abdichten.

Kunststoffdichtungsbahnen und nicht vollflächig aufgeklebte Bitumendichtungen haftet der Nachteil an, dass sich bei einem Schaden das eindringende Wasser zwischen Dichtungsschicht und dem Bauwerk mehr oder minder leicht ausbreiten kann. Besonders bei Betonbauwerken dringt dann das unter der Dichtungsschicht sickernde Wasser an porösen Stellen oder Rissen in den Beton ein. Dort entstehen Rostschäden an der Bewehrung. An der Innenseite der Wände und Decken entstehen feuchte Stellen. Weiter kann das Wasser bis an die Bauwerksfugen sickern und dort austreten.

Tondichtungsbahnen verwenden als Dichtungsmaterial meist Bentonit, das im Gegensatz zu den als Trägermaterial häufig verwendeten Geotextilien nicht filterstabil ist. Bentonit kann durch sickerndes Wasser ausgewaschen werden, wodurch die Dichtungswirkung verloren geht. Dagegen verhindern Tondichtungsbahnen durch das beim Quellen aus der Oberfläche tretende Bentonit das Längssickern von eingedrungenem Wasser.

Zur Abdichtung von Kellern, Tiefgaragen, Grundwasserwannen oder ähnlichen Bauwerken gegen von außen drückendes Wasser aus Bodenschichten, beispielsweise Hangwasser oder Grundwasser im Hoch- und Ingenieurbau, stehen zwei anerkannte Bauweisen zur Verfügung.

Die übliche Bauweise ist die weiße Wanne, bei der wasserdichter Beton, eine aufwendige zusätzliche Bewehrung zur Vermeidung von Rissen und Fugenbändern zwischen den einzelnen Bauteilen oder Arbeitsfugen zum Einsatz kommen. Dennoch auftretende Risse werden mit Injektionsharzen verpreßt.

Die schwarze Wanne hat die Bezeichnung von den meistens verwendeten Bitumendichtungsbahnen. In neuerer Zeit kommen aber auch Kunststoffdichtungen zum Einsatz (DE-A-199 30 701).

Die Abdichtung von Erd- oder Unterwasserkabeln wird durch Umwickeln der jeweiligen Drähte und Drahtverbindungen mit Vliesen oder Bädern erreicht, wobei die Vliese oder Bänder Trägermaterialien darstellen, die mit Hydrogelen oder Superabsorbern versehen sind. Die Patentanmeldung EP-A-0 269 778 lehrt die Herstellung von solchen Quellvliesen durch Einbringen von Superabsorbern in eine Verbindung aus zwei überlagerten Vliesen. Eine alternative Methode, um zu wasserabsorbierenden und quellfähigen Materialien zu gelangen, wird in der Patentanmeldung DE-A-42 43 254 beschrieben, wobei allerdings wasserabsorbierende Tonmaterialien zwischen zwei Vliese eingebracht und durch anschließende Vernadelung fixiert werden.

Die Verwendung von derartigen Vliesen und/oder Garnen zur Verminderung der Längsausbreitung von Wasser in Kabelaufbauten wird in den Patentanmeldungen DE-A-43 06 835 und DE-A-43 16 574 beschrieben.

Weiterhin können die erfindungsgemäßen absorbierenden Verbundstoffe für agri- oder hortikulturelle Anwendungen, beispielsweise zur Erhöhung der Wasseretention, zur Klimakontrolle, beispielsweise zur Regulation der Luftfeuchtigkeit in Räumen und Behältern, sowie zur flächigen Absorption von Wasser oder wässrigen Flüssigkeiten, beispielsweise zur Feuchtigkeitsregulation in Sitz- und Liegemöbeln, eingesetzt werden.

Die Patentanmeldung DE-A-195 21 431 beschreibt Quellpasten für Kabelisolierungen. Die Quellpasten sind hochviskose Hydrogele aus einer vorvernetzten Polyacrylsäure und Ethylenglykoldiglycidylether. Die Anmeldung lehrt, dass mit nicht vorvernetzter Polyacrylsäure nur sehr harte und unflexible Quellvliese erhalten werden. Die Quellpasten sind infolge der notwendigen Vorvernetzung hochviskos, was die Verarbeitung der Quellpasten erschwert.

Die Patenschrift US-5,278,217 beschreibt Kabelisolierungen, die Mischungen aus thermoplastischen Elastomeren und wasserabsorbierenden Harzen enthalten. Die wasserabsorbierenden Harze sind granuläre superabsorbierende Polymere, die oberflächennachvernetzt sein können.

Die Patentanmeldungen EP-A-0 188 091, EP-A-0 357 474 und EP-A-0 930 078 beschreiben absorbierende Verbundstoffe zur Verwendung in Hygieneartikeln. Die absorbierenden Verbundstoffe werden hergestellt indem Polymerfasern mit einer Lösung bzw. Dispersion getränkt werden, die vernetzbare Superabsorber-Polymere enthält. Die Superabsorber-Polymere werden in Gegenwart der Polymerfasern vernetzt.

In EP-A-0 188 091 wurde eine Polyacrylsäure-Dispersion eingesetzt. Der Gehalt an unvernetztem Polymer ("prepolymer") betrug ca. 12 Gew.-%.

In EP-A-0 357 474 wurde eine Polyacrylsäure-Lösung eingesetzt, die Zirkoniumionen als Vernetzer enthielt. Der Polymergehalt der Lösung betrug 12,5 Gew.-%.

Die in den obengenannten Verfahren eingesetzten Lösungen bzw. Dispersionen sind sehr verdünnt, wodurch große Lösungsmittelmengen notwendig werden.

Die ältere deutsche Patentanmeldung mit dem Aktenzeichen 10241530.7 beschreibt absorbierende Verbundstoffe, die durch in Kontakt bringen eines Vlieses auf Basis Polypropylen mit einer, ein quellfähiges Polymer auf Basis Acrylsäure enthaltenen, Emulsion.

Der vorliegenden Erfindung lag die Aufgabe zugrunde, den geschilderten Nachteilen abzuhelfen und neue absorbierende Verbundstoffe für die Anwendung in Dichtungsmaterialien für den Straßen-, Tunnel- und Wasserbau sowie für Baugruben, Hochwasserschutz und Dachabdichtungen, für agri- oder hortikulturelle Anwendungen, zur Klimakontrolle, sowie zur flächigen Absorption von Wasser oder wässrigen Flüssigkeiten bereitzustellen, wobei die neuen absorbierenden Verbundstoffe insbesondere eine verbesserte Haftung des absorbierenden Materials auf dem Trägermaterial aufweisen sollten.

Eine weitere Aufgabe der vorliegenden Erfindung ist ein verbessertes Verfahren zur Herstellung der obengenannten absorbierenden Verbundstoffe, bei dem weder hochviskose Hydrogele noch stark verdünnte Lösungen bzw. Dispersionen eingesetzt werden.

Gegenstand der vorliegenden Erfindung ist demgemäß ein Verfahren zur Herstellung absorbierender Verbundstoffe durch in Kontakt bringen eines festen Trägermaterials enthaltend mindestens ein polymeres Material und mindestens einen Vernetzer und Aushärten der Mischung auf dem Trägermaterial, dadurch gekennzeichnet, dass das polymere Material carboxylgruppenreiche Polymere sind, die zu mindestens 50 Mol-% aus Monomeren ungesättigter Carbonsäuren aufgebaut sind, die Monomeren der carboxylgruppenreichen Polymere vor oder während der Polymerisation ganz oder teilweise durch Basen neutralisiert werden und die Mischung eine Emulsion ist.

Ein weiterer Gegenstand der vorliegenden Erfindung ist die Verwendung von Polymer-Emulsionen zur Herstellung absorbierender Verbundstoffe.

Ein weiterer Gegenstand der vorliegenden Erfindung sind absorbierende Verbundstoffe mit verbesserter Faserbindung, erhältlich nach dem obengenannten Verfahren, wobei das polymere Material durch Emulsionspolymerisation hergestellt wurde.

Ein weiterer Gegenstand der vorliegenden Erfindung ist die Verwendung der erfindungsgemäßen absorbierenden Verbundstoffe in Dichtungsmaterialien für den Straßen-, Tunnel- und Wasserbau sowie für Baugruben, Hochwasserschutz und Dachabdichtungen.

Ein weiterer Gegenstand der vorliegenden Erfindung sind verbesserte Dichtungsmaterialien, enthaltend die erfindungsgemäßen absorbierenden Verbundstoffe, für den Straßen-, Tunnel- und Wasserbau sowie für Baugruben, Hochwasserschutz und Dachabdichtungen.

Geeignete Trägermaterialien zur Herstellung der erfindungsgemäßen Verbundstoffe sind beispielsweise entsprechende Vliese, Gewirke, Gewebe oder Gestricke oder Kombinationen hiervon. Unter einem Vlies versteht man üblicherweise ein nichtgewebtes und nicht gewirktes Gebilde, welches Fasern oder Bänder enthalten kann. Gewirke sind textile Gebilde, die dadurch entstehen, dass Maschen gebildet werden, die sich gegenseitig halten. Gewebe sind textile Gebilde aus sich rechtwinklig kreuzenden Garnen oder Bändern, welche beispielsweise auf Webstühlen hergestellt werden. Die erfindungsgemäß einsetzbaren Trägermaterialien liegen vorzugsweise in Form von Vliesen oder Geweben vor. Geeignete Vliese sind beispielsweise Spinnvliese, Nadelvliese oder aber wasserstrahlverfestigte Vliese. Die Verfestigung der Vliese kann mechanisch, thermisch oder chemisch erfolgen. Bei den erfindungsgemäß einsetzbaren Trägermaterialien handelt es sich vorzugsweise um flächige Strukturen mit beliebiger Dicke, besonders bevorzugt beträgt die Dicke der flächigen Strukturen 1 bis 200 mm, insbesondere 5 bis 50 mm.

Die erfindungsgemäß einsetzbaren textilen Trägermaterialien können aus Bändern oder aus Fasern bestehen, wobei letztere bevorzugt verwendet werden. Geeignete Bänder sind beispielsweise Bändchen, insbesondere solche aus textilen Stoffen oder Folienbändchen aus üblichen Folienmaterialien, wie beispielsweise Kunststoffen, wie Polyethylen und/oder Polypropylen. Als Fasern können Stapelfasern oder Endlosfasern (Filamente) eingesetzt werden. Die Fasern können beispielsweise synthetische, mineralischer oder natürlicher Art sein, wobei insbesondere synthetische und/oder mineralische Fasern eingesetzt werden- Beispiele für synthetische Fasern sind Fasern aus Polyethylen, Polypropylen, Polybutylenterephthalat, Polyamid, Polyethylenterephthalat, Polyester, Polysulfon und/oder Polyetherketon. Mineralische Fasern können beispielsweise aus keramischen Materialien, Siliciumcarbid und/oder Bornitrid bestehen. Möglich ist auch die Verwendung von Fasern aus Kohlenstoff oder Glasfasern.

Als Träger bevorzugte Materialien sind Polyethylen, Polypropylen, Polybutylenterephthalat, Polyamid, Polyethylenterephthalat, Polyester, Polysulfon und/oder Polyetherketon, insbesondere Polypropylen.

Als carboxylgruppenreiche Polymere eignen sich carboxylgruppenreiche Polymere auf der Basis von Homo- oder Copolymeren ungesättigter Carbonsäuren oder deren Derivate. Dabei bedeutet carboxylgruppenreiches Polymer, dass das Polymer zu mindestens 50 Mol-%, vorzugsweise mindestens 75 Mol-%, besonders bevorzugt mindestens 95 Mol-%, aus Monomeren ungesättigter Carbonsäuren aufgebaut ist.

Die als polymere Materialien verwendeten carboxylgruppenreichen Polymere werden in Form einer Emulsion von organischen Lösungsmitteln und Wasser sowie den carboxylgruppenreichen Polymeren auf das Trägermaterial aufgebracht.

Geeignete organische Lösungsmittel sind die in der chemischen Technologie üblicherweise eingesetzten Lösungsmittel, beispielsweise aliphatische, cycloaliphatische oder aromatische Kohlenwasserstoffe, beispielsweise Hexan oder Heptan, Cyclohexan, Toluol oder Xylole. Daneben sind auch organische Etherverbindungen, wie beispielsweise Petrolether oder Tetrahydrofuran sowie halogenierte Kohlenwasserstoffe denkbar. Gut geeignete organische Lösungsmittel sind ferner Mineralöle aber auch natürliche Öle, wie beispielsweise Rapsöl.

Hierfür geeignete Mineralöle sind im wesentlichen die aus mineralischen Rohstoffen, wie Erdöl, Kohle, Holz oder Torf gewonnenen flüssigen Destillationsprodukte, welche überwiegend aus Gemischen von gesättigten Kohlenwasserstoffen bestehen. Derartige Mineralöle sind beispielsweise Benzin, Dieselöle, Heizöle, Schmieröle, Leuchtpetroleum oder Isolieröle.

Neben den organischen Lösungsmitteln und Wasser enthält die erfindungsgemäß verwendete Emulsion carboxylgruppenreiche Polymere, vorzugsweise auf der Basis von Copolymeren allylisch oder vinylisch ungesättigter Carbonsäuren oder deren Derivate, beispielsweise deren Ester, Amide oder Nitrile sowie Anhydride.

Die carboxylgruppenreichen Polymere können als sogenannte Hauptmonomere allylisch oder vinylisch ungesättigte Mono- oder Dicarbonsäuren enthalten. Bevorzugt sind dabei vinylisch ungesättigte Mono- oder Dicarbonsäuren, wie beispielsweise Acrylsäure und/oder Methacrylsäure sowie Maleinsäure, Fumarsäure oder Itaconsäure, bzw. deren Ester, Amide, Nitrile oder Anhydride. Bevorzugte Hauptmonomere sind Acrylsäure sowie Methacrylsäure, wobei Acrylsäure besonders bevorzugt ist.

Der Anteil dieser Hauptmonomeren am gesamten carboxylgruppenreichen Polymeren beträgt vorzugsweise mindestens 60 Gew.%, insbesondere mindestens 70 Gew.-% und besonders bevorzugt mindestens 80 Gew.%. Dementsprechend beträgt der Anteil des oder der Comonomere höchstens 40 Gew.%, insbesondere höchstens 30 Gew.-% und besonders bevorzugt höchstens 20 Gew.-%.

Die carboxylgruppenreichen Polymere können eines oder mehrere der nachstehenden Comonomere enthalten:

- Ester aus vorzugsweise 3 bis 6 C-Atomen aufweisenden $\alpha,\beta$-monoethylenisch ungesättigten Mono- oder Dicarbonsäuren, wie Acrylsäure, Methacrylsäure, Maleinsäure, Fumarsäure und Itaconsäure, mit $C_1$-$C_{12}$-Alkanolen, vorzugsweise $C_1$-$C_8$-Alkanolen. Derartige Ester sind insbesondere Methyl-, Ethyl-, n-Butyl-, Isobutyl-, tert.-Butyl-, n-Pentyl-, iso-Pentyl- und 2-Ethylhexylacrylat und/oder - methacrylat;

- Acrylnitril, Methacrylnitril;

- Acrylamide und alkylsubstituierte Acrylamide, wie Acrylamid, Methacrylamid, N,N-Dimethylacrylamid, N-Methylolmethacrylamid, N-tert.-Butylacrylamid, N-Methylmethacrylamid, Methylenbisacrylamid sowie Mischungen davon;

- sulfogruppenhaltige Monomere, wie Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalze, deren Mischungen sowie Sulfopropylacrylat und/oder Sulfopropylmethacrylat;

- $C_1$-$C_4$-Hydroxyalkylester von $C_3$-$C_6$-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxilierten Derivate oder Estern von mit 2 bis 50 Mol Ethylenoxid, Propylenoxid, Butylenoxid oder Mischungen davon alkoxilierten $C_1$-$C_{18}$-Alkoholen mit den erwähnten Säuren, wie Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyethylenglykolacrylat oder (Meth)acrylsäureester von mit 3, 5, 7, 10 oder 30 Mol Ethylenoxid umgesetztem $C_{13}$/$C_{15}$-Oxoalkohol sowie deren Mischungen;

- Alkylaminoalkyl(meth)acrylate, wie 2-(N,N-Dimethylamino)-ethyl(meth)acrylat oder 3-(N,N-Dimethylamino)-propyl(meth)acrylat, Alkylaminoalkyl(meth)acrylamide, wie 2-(N,N-Dimethylamino)-ethyl(meth)acrylamid oder 3-(N,N-Dimethylamino)-propyl(meth)acrylamid, deren Quarternisierungsprodukte, wie 2-(N,N,N-Trimethylammonium)-ethylmethacrylat-chlorid oder 3-(N,N,N-Trimethylammonium)-propyl(meth)acrylamid-chlorid, sowie Mischungen davon;

- 1,3-Diketogruppen enthaltende Monomere, wie Acetoacetoxyethyl(meth)acrylat oder Diacetonacrylamid, harnstoffgruppenhaltigen Monomeren, wie Ureidoethyl(meth)acrylat, Acrylamidoglykolsäure, Methacrylamidoglykolatmethylether;

- Silylgruppen enthaltende Monomere, wie Trimethoxysilylpropylmethacrylat.

Besonders bevorzugte Comonomere sind Ester oder Amide der Acrylsäure oder der Methacrylsäure, beispielsweise n-Butylacrylat, Butylmethacrylat, 2-Ethylhexylacrylat, 2-Ethylhexylmethacrylat, Acrylamid oder Methacrylamid.

Die erfindungsgemäß einzusetzenden carboxylgruppenreichen Polymere können auch in Mengen von bis zu 2 Gew.%, insbesondere bis zu 1 Gew.-%, vorzugsweise bis zu 0,5 Gew.-% bi- oder multifunktionelle Comonomere aufweisen, welche für eine leichte Vernetzung der entstehenden carboxylgruppenreichen Polymere sorgen. Geeignet ist hierfür beispielsweise Methylenbisacrylamid. Weitere einsetzbare bi- oder multifunktionelle Monomere werden beispielsweise in der WO-A-93/21237 beschrieben. Durch den Einbau der bi- oder multifunktionellen Monomere entstehen Polymere, die weitgehend wasserunlöslich, aber quellbar sind. Vorzugsweise wird aber auf die Verwendung bi-oder multifunktioneller Monomere bei der Emulsionspolymerisation verzichtet.

Die Herstellung derartiger carboxylgruppenreicher Polymerer erfolgt vorzugsweise durch radikalische Polymerisation in der Emulsion aus organischen Lösungsmitteln und Wasser.

Die Polymerisation wird vorzugsweise in Gegenwart von Radikale bildenden Verbindungen (Initiatoren) durchgeführt. Man benötigt von diesen Verbindungen vorzugsweise 0,05 bis 10 Gew.-%, besonders bevorzugt 0,2 bis 5 Gew. %, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis-(2-amidinopropan)-dihydrochlorid, 2-(Carbamoylazo)-isobutyronitril und 4,4-Azobis-(4-cyanovaleriansäure). Auch die bekannten Redox-Initiatorsysteme, wie $H_2O_2$/Ascorbinsäure oder tert.-Butylhydroperoxid/Natriumhydroxymethansulfinat, können als Polymerisationsinitiatoren verwendet werden.

Die Initiatoren können allein oder in Mischung untereinander angewendet werden, beispielsweise Mischungen aus Wasserstoffperoxid und Natriumperoxidisulfat. Für die Polymerisation in wässrigem Medium werden bevorzugt wasserlösliche Initiatoren eingesetzt.

Weiter können die erfindungsgemäß einzusetzenden Emulsionen übliche Zusätze je nach Anwendungszweck enthalten, beispielsweise Bakterizide oder Fungizide. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Dispersionen, Plastifizierungsmittel, Retentionsmittel, Pigmente und Füllstoffe enthalten. Das Einmischen dieser Füllstoffe kann auch durch Induktionserwärmung erfolgen, was die Aushärtung erleichtert.

Die zur Einführung der polymeren Materialien verwendeten Emulsionen aus organischen Lösungsmitteln, Wasser und carboxylgruppenreichen Polymeren können durch grenzflächenaktive Hilfsstoffe stabilisiert werden. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise quaternisierte Aminalkoxylate, Alkylbetaine, Alkylamidobetaine und/ oder Sulfobetaine verwendet.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolid-2-on, Polyvinyl-2-methylimidazolin, Maleinsäure und Maleinsäureanhydrid enthaltende Copolymerisate, wie in DE-A-25 01 123 beschrieben.

Die Emulgatoren oder Schutzkolloide werden üblicherweise in Konzentrationen von 0,05 bis 20 Gew.-%, bezogen auf die Monomere, eingesetzt.

Die Monomere der carboxylgruppenreichen Polymere werden vor oder während der Polymerisation ganz oder teilweise durch Basen neutralisiert. Als Basen kommen beispielsweise Alkali- oder Erdalkaliverbindungen, wie Natriumhydroxid, Kaliumhydroxid, Calciumhydroxid, Magnesiumoxid und/oder Natriumcarbonat, Ammoniak sowie primäre, sekundäre und/oder tertiäre Amine, wie Ethylamin, Propylamin, Isopropylamin, Butylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanoiamin, Diisopropanolamin oder Morpholin, infrage. Bevorzugt wird dabei Natriumhydroxid eingesetzt.

Das Verhältnis von wässriger zu organischer Phase bei der Emulsionspolymerisation beträgt typischerweise 0,5 bis 10, vorzugsweise 1 bis 5, besonders bevorzugt 2 bis 4. Bevorzugt werden Mineralöle als organische Phase eingesetzt.

Die Reaktionstemperatur bei der Emulsionspolymerisation beträgt typischerweise weniger als 100°C, bevorzugt weniger als 90°C, besonders bevorzugt weniger als 80°C.

Nach beendeter Polymerisation wird die das polymere Material enthaltende Emulsion mit einem Vernetzer versetzt. Die erfindungsgemäß einsetzbaren Vernetzer sind vorzugsweise kovalente Vernetzer, d.h., die Vernetzung erfolgt über die Ausbildung kovalenter Bindungen, beispielsweise Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether, Polyglycerindiglycidylether, Epichlorhydrin, Etylendiamin, Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A, Glycerin, Trimethylolpropan, Pentaerythrit, Sorbitol, Diethanolamin, Triethanolamin, Etylendiamin, Ethylencarbonat, Propylencarbonat, 2-Oxazolidone, wie 2-Oxazolidinon oder N-Hydroxyethyl-2-oxazolidinon, Morpholin-2,3-dione, wie N-2-Hydroxyethyl-morpholin-2,3-dion, N-Methyl-morpholin-2,3-dion, N-Ethyl-morpholin-2,3-dion und/oder N-tert.-Butyl-morpholin-2,3-dion, 2-Oxotetrahydro-1,3-oxazin, N-Acyl-2-oxazolidone, wie N-Acetyl-2-oxazolidon, bicyclische Amidacetale, wie 5-Methyl-1-aza-4,6-dioxabicyclo[3.3.0]octan, 1-Aza-4,6-dioxa-bicyclo[3.3.0]octan und/oder 5-Isopropyl-1-aza-4,6-dioxa-bicyclo[3.3.0]octan, und/oder Bis- und Poly-2-oxazolidinone. Bevorzugt sind Diepoxide, wie Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether sowie Polyglycerindiglycidylether und ganz besonders bevorzugt sind Ethylenglykoldiglycidylether und Diethylenglykoldiglycidylether.

Der Vernetzer kann dabei in einer Menge von 0,01 bis 10 Gew.%, vorzugsweise von 0,5 bis 2 Gew.-%, bezogen auf das polymere Material, verwendet werden.

Die erfindungsgemäßen absorbierenden Verbundstoffe können beispelsweise hergestellt werden, indem die Trägermaterialien mit der das mindestens eine polymere Material und den mindestens einen Vernetzer enthaltenden Emulsion beschichtet, imprägniert, pflatscht, aufgeschäumt oder besprüht. Vorzugsweise werden die Trägermaterialien mit der Emulsion getränkt, besonders bevorzugt durch Eintauchen in einem mit der Emulsion gefüllten Imprägniertrog. Anschließend wird das mit Emulsion beladene Trägermaterial durch zwei Walzen oberhalb des Imprägniertrogs geführt. Dadurch wird überschüssige Emulsion abgequetscht und läuft in den Trog zurück.

Das mit Emulsion beladene Trägermaterial kann bei Temperaturen von bis zu 200°C, vorzugsweise 80 bis 180°C, besonders bevorzugt 100 bis 140°C, getrocknet. Bevorzugt im Luftstrom. Geeignete Trockner sind beispielsweise Zylinder-, Trommel- und Walzentrockner.

Während der Trocknung werden das Trägermaterial und das polymere Material untereinander und miteinander vernetzt.

Falls es sich bei dem Trägermaterial um ein Faservlies handelt, kann auch ein unter dem Namen Maliwatt bekanntes Verfahren angewandt werden. Bei diesem Verfahren wird ein Vlies, das aus quer zur Produktionsrichtung abgelegten Fasern besteht, durch Vernähen der Faserlagen mit Fremdfäden in Längsrichtung im Abstand von etwa 1 mm verfestigt. In diese Faserschicht wird dann die mindestens ein polymeres Material und den mindestens einen Vernetzer enthaltende Emulsion eingearbeitet.

Anstelle von Faservlies können auch textile Gewebe eingesetzt werden.

Die in den absorbierenden Verbundstoffen vorliegenden Fasern und/oder Bänder sowie die quellfähigen Materialien liegen jeweils in einer solchen Menge vor, dass die Fasern und/oder Bänder von den quellfähigen Materialien umhüllt sind und die Hohlräume des absorbierenden Verbundstoffs im gequollenen Zustand vollständig mit stoffgebundenem Wasser gefüllt sind. Die optimale Menge an quellfähigem Material lässt sich beispielsweise durch Vorversuche ermitteln. Dazu wird die Menge M [g] an mindestens ein polymeres Material und den mindestens einen Vernetzer enthaltenden Emulsion eingewogen, in Abwesenheit des Trägermaterials getrocknet und das Volumen Q [ml] nach Quellung in Wasser bestimmt. Die optimale Beladung B [g] des Trägermaterials mit der Emulsion ist dann

$$B = V \times \frac{M}{Q},$$ wobei V [ml] das maximale Volumen ist, auf das das Trägermaterial expandiert werden kann. Näherungsweise kann statt des Volumens Q auch das Gewicht G [g] nach Quellung zur Berechnung verwendet werden. In diesem Fall ist die optimale Beladung B des Trägermaterials mit der Emulsion $B = V \times \frac{M}{G} \times 1 \frac{g}{ml}$. Üblicherweise sollten die so ermittelten Werte um nicht mehr als 50%, vorzugsweise 30%, besonders bevorzugt 10%, unter- oder überschritten werden. Zu niedrige Beladungen führen zu einer verminderten Absorptionskapazität. Zu hohe Beladungen führen zum Reißen des absorbierenden Verbundstoffes oder zum Austreten von Hydrogel aus dem absorbierenden Verbundstoff (Quellschleim).

Hinsichtlich der Menge an quellfähigen Materialien werden üblicherweise pro m² an fertigem Quellvlies 0,05 bis 20 kg, insbesondere 0,1 bis 10 kg dieser quellfähigen Materialien eingesetzt. Was die Menge an Fasern und/oder Bändern pro m² an fertigem Quellvlies betrifft, so beträgt diese üblicherweise 0,1 bis 2 kg, insbesondere 0,15 bis 1 kg.

Um die Wasserundurchlässigkeit in der horizontalen Ebene zu erreichen, muss das Trägermaterial ist in der Weise mit den polymeren Materialien getränkt werden, dass eine vollständige Umhüllung der Fasern erreicht wird.

In den erfindungsgemäßen absorbierenden Verbundstoffen können auch Kombinationen von carboxylgruppenreichen Polymeren einerseits und granulären superabsorbierenden Polymeren auf Basis von teilneutralisierten vernetzten Polyacrylsäuren andererseits vorliegen. Die superabsorbierenden teilneutralisierten Polyacrylsäuren können mit üblichen Vernetzern, die vorzugsweise mindestens zwei ethylenisch ungesättigte Doppelbindungen, eine ethylenisch ungesättigte Doppelbindung und eine weitere funktionelle Gruppe oder aber zwei funktionelle Gruppen aufweisen, vernetzt werden. Die funktionellen Gruppen dieser Vernetzer sollten dabei in der Lage sein, mit den Säuregruppen der Acrylsäure zu reagieren. Geeignete funktionelle Gruppen sind beispielsweise Hydroxyl-, Amino-, Epoxi- und Aziridinogruppen. Die granulären superabsorbierenden Polymeren auf Basis von teilneutralisierten vernetzten Polyacrylsäuren weisen üblicherweise Teilchengrößen von 200 bis 800 μm auf.

Es kann sich auch empfehlen, auf der dem Wasser abgewandten Seite der erfindungsgemäßen absorbierenden Verbundstoffe aus Fasern und/oder Bändern sowie quellfähigen Materialien ein Gemisch aus granulären, superabsorbierenden Polymeren auf Basis von teilneutralisierten vernetzten Polyacrylsäuren einerseits und einem Pulver aus Polymeren anderseits aufzubringen. Hierfür eignen sich insbesondere thermoplastischen Pulver aus Polyolefinen wie Polyethylen oder Polypropylen. Dabei sollte ein Mischungsverhältnis zwischen dem granulären, superabsorbierenden Polymeren und dem Polymerpulver von ca. 0,5:1 bis 5:1, insbesondere von 1:1 bis 3:1 eingehalten werden. Das so erhaltene Gemisch aus granulären, superabsorbierenden Polymeren und dem Polymerpulver kann danach mit einem etwa 50 bis 80 g/m² schweren absorbierenden Verbundstoffen mit einer wirksamen Öffnungsweite von weniger als 0,12 mm abgedeckt werden und anschließend durch Hitze und Druck mit dem erfindungsgemäßen absorbierenden Verbundstoffen verbunden werden. Auf diese Weise kann im eingebauten Zustand das aufgequollene quellfähige Material des erfindungsgemäßen absorbierenden Verbundstoffes sich gegen das ebenfalls gequollene granuläre, superabsorbierende Polymer abstützen. Dadurch wird ein Ausspülen des quellfähigen Materials aus dem absorbierenden Verbundstoff vermieden.

Die erfindungsgemäßen absorbierenden Verbundstoffe können Bestandteile von Abdichtungen sein, welche vorzugsweise neben dem absorbierenden Verbundstoff noch wenigstens eine Dichtungsbahn aus Kunststoffen aufweisen. Bevorzugt ist dabei eine solche Anordnung, in der die Abdichtung einen absorbierenden Verbundstoff aufweist, welches zwischen zwei Dichtungsbahnen aus Kunststoffen angeordnet ist. Der absorbierende Verbundstoff kann dabei durch übliche Befestigungsverfahren wie beispielsweise durch Verhaken, Kleben, Anknüpfen oder durch Kalandrieren unter Druck und Temperatur mit den Dichtungsbahnen verknüpft werden.

Der erfindungsgemäße absorbierende Verbundstoff kann beispielsweise als Dichtungsmaterial für den Straßen-, Tunnel- und Wasserbau sowie für Baugruben, den Hochwasserschutz und für Dachabdichtungen verwendet werden. Speziell bei Baugruben, im Straßenbau und beim Hochwasserschutz kann der erfindungsgemäße absorbierende Verbundstoff entweder auch allein, oder aber in Kombination mit Gemischen aus granulären, superabsorbierenden Polymeren und Pulvern aus anderen Polymeren eingesetzt werden.

Darüberhinaus sind hierbei insbesondere der Einbau des absorbierenden Verbundstoffes unter einer Dichtungsbahn aus Kunststoff gegen das zu schützende Bauwerk zur Verhinderung von Unterläufigkeit bei Schäden an der Dichtungsbahn, beispielsweise für Flachdächer im Hochbau, bei Tunnels in offener Bauweise sowie bei Abdichtungen von Tiefgeschossen oder Tiefgaragen.

Andere Einsatzmöglichkeiten des absorbierenden Verbundstoffes beziehen sich auf dessen Einbau zwischen zwei Dichtungsbahnen als sogenannte selbstheilende Abdichtungen im Tunnelbau (gemäß der DE-A-196 25 245) sowie als Bestandteil einer Membranwanne im Verkehrswegebau (gemäß der DE-A-199 30 701) oder im Hoch-und Industriebau.

Weitere Anwendungsmöglichkeiten des erfindungsgemäßen absorbierenden Verbundstoffes betreffen dessen Einbau unter der Betonschutzschicht für eine Kunststoffdichtungsbahn in Becken und Kanälen zur Verhinderung von Sickerströmungen unter den Betonplatten zu Schadstellen in der Kunststoffdichtung und zur Verringerung der Spannung in den Betonplatten durch verringerte Reibung. Beispiele hierfür sind der Einbau der absorbierenden Verbundstoffe in Regenrückhaltebecken, Landschaftsteiche, Schlammbecken sowie in Bewässerungs- und Kraftwerkskanälen bei grobkörnigen Böden.

Denkbar ist weiterhin der Einbau des absorbierenden Verbundstoffes entweder allein oder aber in Verbindung mit anderen Abdichtungsbahnen im Erdbau anstelle von Tondichtungsbahnen, insbesondere in Bewässerungs- oder Ableitungskanälen, zur Abdichtung von Landschaftsteichen, Speicherteichen oder Schutzgebieten, zur Schaffung künstlicher Grundwasserträger sowie zur Erstdichtung von Membranwannen und Baugruben.

Die erfindungsgemäßen absorbierenden Verbundstoffe können auch in Kombination mit Schutzvliesen, welche dem Schutz von Dichtungen dienen, eingesetzt werden. Derartige Schutzvliese bremsen bei Schäden in der Dichtung in körnigen Böden den Zustrom des Wassers zur Schadensstelle nicht (vertikale Durchlässigkeit). Bei bindigeren Böden fördern sie die Sammlung und Verteilung des durch die Schadensstelle strömenden Wassers (horizontale Durchlässigkeit). Der erfindungsgemäße absorbierende Verbundstoff erhöht hierbei durch seine Abdichtungsfunktion die Sicherheit.

Eine weitere Möglichkeit des Einsatzes der erfindungsgemäßen absorbierenden Verbundstoffe besteht darin, diese als Verkleidung und Abdichtung in Drahtkörben einzusetzen, welche als temporärer Hochwasserschutz oder im Wasserbau schnell aufgestellt und dann maschinell mit Splitt, Kies oder Recyclingmaterial befüllt werden können.

Die erfindungsgemäßen absorbierenden Verbundstoffe lassen sich einfach herstellen. Der Lösungsmitteleinsatz ist gegenüber dem Stand der Technik reduziert, ohne dass hochviskose Mischungen verarbeitet werden müssen. Hierbei ist insbesondere Vorteilhaft, dass Emulsionen unvernetzter Polymere einsetzbar sind. Diese Lösungen zeichnen sich durch eine besonders niedrige Viskosität aus und sind besonders leicht zu verarbeiten. Die Haftung des quellfähigen Materials auf dem Trägermaterial ist verbessert. Der Anteil löslicher Anteile, d.h. aus dem absorbierenden Verbundstoff auswaschbarer Polymere, und die Quellschleimbildung bei der Anwendung sind im Vergleich zum Stand der Technik deutlich reduziert.

Die erfindungsgemäßen absorbierenden Verbundstoffe weisen gegenüber den aus dem Stand der Technik bekannten textilen Vliesen oder Geweben u.a. eine bessere Verarbeitbarkeit (maschinelle Verlegung möglich) und Quellbarkeit sowie eine höhere Wasserundurchlässigkeit, insbesondere eingebaut, verhindert es die Ausbreitung des Wassers und gibt durch seine puffernde Wirkung eine größere Sicherheit gegen übliche Beschädigungen. Dies resultiert daher, dass auch in horizontaler Richtung auf. Wird der absorbierende Verbundstoff als Schutzlage die vorhandenen Fasern oder Bänder vollständig mit stoffgebundenem Wasser umhüllt sind, so dass keine wasserführenden Schichten entstehen. Weiterhin sind sie mit Dichtungsbahnen sehr gut kaschierbar.

Beispiele

Beispiel 1

In einem Rührgefäß wurden 104,5g entmineralisiertes Wasser mit 562,5g Acrylsäure (99,8%ig) sowie 1246,0g 25%iger Natronlauge, 5,63g 1%iges wässriges Methylenbisacrylamid, 1,25g 40%iges wässriges Trilon® C und 3,38g 1%iges wässriges Rongalit® C vermischt (wässrige Phase). In einem zweiten geschlossenen Rührgefäß (2 Liter HWS, mit Ankerrührer) wurden 500g Shellsol® D 70 (100%ig) und 70g Emulan® GOE (100%ig) vorgelegt (organische Phase) und die wässrige Phase zudosiert.

Unter Stickstoffbegasung (15 Liter pro Stunde) und Temperierbad wurden die im zweiten Rührgefäß vereinigten wässrigen und organischen Phasen bei 400 Umdrehungen pro Minute 60 Minuten lang bei einer Temperatur von 31 °C voremulgiert. Danach wurde die Drehzahl des Rührers auf 200 Umdrehungen pro Minute verringert und 3,94g 10%iger wässriger Natriumpersulfatlösung zugegeben.

Die Polymerisation sprang sofort an. Als die Innentemperatur 35°C erreichte, wurde das Temperierbad entfernt. Die Innentemperatur erreichte eine Maximaltemperatur von 66,2°C. Nachdem die Temperatur um 1°C gefallen war, wurden 28,13g 10%iger wässriger Natriumpersulfatlösung und 10 Minuten später 19,69g 1%igen wässriger Rongalitlösung zudosiert.

Nach dem Erkalten der Emulsion wurden 12,5g Denacol EX 810 zugegeben und die Emulsion für weitere 5 Minuten bei 200 Umdrehungen pro Minute durchmischt. Auf diese Weise wurde eine Emulsion aus Mineralöl, Wasser, carboxylgruppenreichen Copolymeren der Acrylsäure und Vernetzer erhalten.

| | |
|---|---|
| Shellsol® D 70 | Mineralöl der Shell AG |
| Emulan® GOE | Emulgator der BASF Aktiengesellschaft, auf Basis von Oleylglycerinetherethoxylat |
| Trilon® C | Komplexbildner der BASF Aktiengesellschaft, auf Basis des Trinatriumsalzes der Hydroxyethylethylendiamintriessigsäure in Wasser |
| Rongalit® C | Reduktionsmittel der BASF Aktiengesellschaft, auf Basis des Natriumsalzes der Hydroxymethansulfinsäure |
| Denacol® EX 810 | Nachvernetzer der Firma Nagase auf Basis von Ethylenglykoldiglycidylether |

Beispiel 2

Ein Polyester-Nadelvlies mit einem Flächengewicht von 280g/m$^2$ wurde mit der in Beispiel 1 hergestellten Emulsion getränkt. Die Tränkung wurde in einem Foulard durchgeführt. Der Foulard bestand aus einer mit der Emulsion gefüllten Wanne und zwei Abstreifwalzen mit seitlichen Begrenzern. Das Vlies wurde mit einer Geschwindigkeit von 1 Meter pro Minute durch den Foulard geführt. Das mit Emulsion beladene Vlies wurde 5 Minuten bei 170°C getrocknet. Der absorbierende Verbundstoff hatte ein Flächengewicht von 410g/m$^2$, die Gewichtszunahme (Festauftrag) betrug 46%.

Der absorbierende Verbundstoff wurde in Wasser gelagert und durch Differenzwägung nach einer Stunde die Wasseraufnahme bestimmt. Des weiteren wurde durch manuelle Prüfung die Quellschleimbildung und damit die Auswaschverluste der Vliese nach den jeweiligen Zeiten geprüft. Zusätzlich wurde ein Benetzugstest durchgeführt. Dazu wird ein Wassertropfen auf die Oberfläche des absorbierenden Verbundstoffes aufgebracht und die Zeit bis zum Verschwinden des Tropfes von der Oberfläche gemessen. Die Ergebnisse sind in Tabelle 1 zusammengefasst.

Beispiel 3

Es wurde verfahren wie unter Beispiel 2. Eingesetzt wurde Polyester- Füllvlies mit einem Flächengewicht von 80g/m$^2$.

Tabelle 1

|  | Beispiel 2 | Beispiel 3 |
|---|---|---|
| Festauftrag | 46% | 98% |
| Benetzung | 10 Sekunden | ca. 1 Sekunde |
| Quellschleim | ohne | ohne |
| Wasseraufnahme | 1000g/m$^2$ | 600g/m$^2$ |

**Patentansprüche**

1. Verfahren zur Herstellung absorbierender Verbundstoffe durch in Kontakt bringen eines festen Trägermaterials mit einer Mischung enthaltend mindestens ein polymeres Material und mindestens einen Vernetzer und Aushärten der Mischung auf dem Trägermaterial, **dadurch gekennzeichnet, dass** die Mischung eine Emulsion ist.

2. Verfahren nach Anspruch 1, **dadurch gekennzeichnet, dass** die Trägermaterialien Fasern und/oder Bänder sind.

3. Verfahren nach den Ansprüchen 1 oder 2, **dadurch gekennzeichnet, dass** die Trägermaterialien Vliese und/oder Gewebe sind.

4. Verfahren nach den Ansprüchen 1 bis 3, **dadurch gekennzeichnet, dass** die Fasern Filamente und/oder Stapelfasern sind

5. Verfahren nach den Ansprüchen 1 bis 4, **dadurch gekennzeichnet, dass** die Fasern synthetische Fasern sind.

6. Verfahren nach den Ansprüchen 1 bis 5, **dadurch gekennzeichnet, dass** die Emulsion als organisches Lösungsmittel Mineralöle enthält

7. Verfahren nach den Ansprüchen 1 bis 6, **dadurch gekennzeichnet, dass** die polymeren Materialien carboxylgruppenreiche Polymere auf der Basis von Copolymeren vinylisch und/oder allylisch ungesättigter Carbonsäuren und/oder deren Derivate sind.

8. Verfahren nach den Ansprüchen 1 bis 7, **dadurch** gekennzeinet, dass die polymeren Materialien Polymere auf Basis von Copolymeren der Acrylsäure und/oder von Estern und/oder Amiden der Acrylsäure und/oder der Methacrylsäure sind.

9. Verfahren nach den Ansprüchen 1 bis 8, **dadurch gekennzeichnet, dass** die polymeren Materialien zusätzlich granuläre superabsorbierende Polymere auf Basis von teilneutralisierter vernetzter Polyacrylsäure enthalten.

10. Verfahren nach den Ansprüchen 1 bis 9, **dadurch gekennzeichnet, dass** kovalente Vernetzungsmittel verwendet werden.

11. Verfahren nach Anspruch 10, **dadurch** gekennzeinet, dass das kovalente Vernetzungsmittel ein Diepoxid ist.

12. Verfahren nach den Ansprüchen 1 bis 11, **dadurch gekennzeichnet, dass** bei 100 bis 200°C ausgehärtet wird.

13. Verfahren nach den Ansprüchen 1 bis 12, **dadurch gekennzeichnet, dass** die Trägermaterialien mit mindestens einem polymeren Material beschichtet, imprägniert, gepflatscht, aufgeschäumt oder besprüht und anschließend ausgehärtet werden.

14. Absorbierende Verbundstoffe, erhältlich nach einem Verfahren der Ansprüche 1 bis 13.

**15.** Abdichtung, enthaltend neben wenigstens einer Dichtungsbahn aus Kunststoffen wenigstens ein absorbierenden Verbundstoff nach einem der Ansprüche 1 bis 13.

**16.** Abdichtung nach Anspruch 15, wobei der absorbierende Verbundstoff zwischen zwei Dichtungsbahnen aus Kunststoffen angeordnet ist.

**17.** Verwendung der absorbierenden Verbundstoffe gemäß Anspruch 14 in Dichtungsmaterialien, in Kabelummantelungen, zur Erhöhung der Wasseretention in Landwirtschaft und Gartenbau, zur Regulation der Luftfeuchtigkeit in Räumen und Behältern sowie zur Feuchtigkeitsregulation in Sitz- und Liegemöbeln.

**18.** Verwendung gemäß Anspruch 17 in Dichtungsmaterialien für den Straßen-, Tunnel- und Wasserbau sowie für Baugruben, Hochwasserschutz und Dachabdichtungen.

**Claims**

**1.** A process for producing an absorbent composite by contacting a solid supporting material with a mixture comprising at least one polymeric material and at least one crosslinker and curing the mixture on the supporting material wherein the mixture is an emulsion.

**2.** The process according to claim 1 wherein the supporting material is fibers and/or tapes.

**3.** The process according to claim 1 or claim 2 wherein the supporting material is wovens and/or nonwovens.

**4.** The process according to any of claims 1 to 3 wherein the fibers are filaments and/or staple fibers.

**5.** The process according to any of claims 1 to 4 wherein the fibers are synthetic fibers.

**6.** The process according to any of claims 1 to 5 wherein the emulsion comprises an organic solvent comprising a mineral oil.

**7.** The process according to any of claims 1 to 6 wherein the polymeric material is carboxyl-rich polymers based on copolymers of vinylically and/or allylically unsaturated carboxylic acids and/or their derivatives.

**8.** The process according to any of claims 1 to 7 wherein the polymeric material is polymers based on copolymers of acrylic acid and/or on esters and/or amides of acrylic acid and/or of methacrylic acid.

**9.** The process according to any of claims 1 to 8 wherein the polymeric material further comprises a granular superabsorbent polymer based on partially neutralized crosslinked polyacrylic acid.

**10.** The process according to any of claims 1 to 9 utilizing covalent crosslinking agents.

**11.** The process according to claim 10 wherein the covalent crosslinking agent is a diepoxide.

**12.** The process according to any of claims 1 to 11 wherein said curing is effected in the range from 100 to 200°C.

**13.** The process according to any of claims 1 to 12 wherein the supporting material is coated, impregnated, padded, foamed or sprayed with at least one polymeric material and subsequently cured.

**14.** An absorbent composite obtainable by any process of claims 1 to 13.

**15.** A close-out comprising at least one absorbent composite according to any one of claims 1 to 13 as well as at least one sealing membrane composed of plastics.

**16.** The close-out according to claim 15 wherein the absorbent composite is disposed between two sealing membranes composed of plastics.

**17.** The use of the absorbent composite according to claim 14 in sealing materials, in cable sheaths, to enhance water retention in agriculture and horticulture, to regulate the humidify in rooms and containers and also for moisture regulation in sitting or lying furniture.

18. The use according to claim 17 in sealing materials for road, tunnel and water engineering and also for excavations, highwater protection and roof-sealing systems.

**Revendications**

1. Procédé de fabrication de matériaux composites absorbants par mise en contact d'un matériau de support solide avec un mélange contenant au moins un matériau polymère et au moins un agent de réticulation et par durcissement du mélange sur le matériau de support, **caractérisé en ce que** le mélange est une émulsion.

2. Procédé selon la revendication 1, **caractérisé en ce que** les matériaux de support sont des fibres et/ou des bandes.

3. Procédé selon les revendications 1 ou 2, **caractérisé en ce que** les matériaux de support sont des voiles et/ou des tissus.

4. Procédé selon les revendications 1 à 3, **caractérisé en ce que** les fibres sont des filaments et/ou des fibres coupées.

5. Procédé selon les revendications 1 à 4, **caractérisé en ce que** les fibres sont des fibres synthétiques.

6. Procédé selon les revendications 1 à 5, **caractérisé en ce que** l'émulsion contient des huiles minérales comme solvant organique.

7. Procédé selon les revendications 1 à 6, **caractérisé en ce que** les matériaux polymères sont des polymères riches en groupements carboxyle, sur la base de copolymères d'acides carboxyliques à insaturation vinylique et/ou allylique et/ou de leurs dérivés.

8. Procédé selon les revendications 1 à 7, **caractérisé en ce que** les matériaux polymères sont des polymères à base de copolymères d'acide acrylique et/ou d'esters et/ou d'amides d'acide acrylique et/ou d'acide méthacrylique.

9. Procédé selon les revendications 1 à 8, **caractérisé en ce que** les matériaux polymères contiennent des polymères granulaires superabsorbants supplémentaires, à base d'acide polyacrylique réticulé partiellement neutralisé.

10. Procédé selon les revendications 1 à 9, **caractérisé en ce que** l'on emploie des agents de réticulation covalents.

11. Procédé selon la revendication 10, **caractérisé en ce que** l'agent de réticulation covalent est un diépoxyde.

12. Procédé selon les revendications 1 à 11, **caractérisé en ce que** l'on effectue le durcissement à une température de 100 à 200 °C.

13. Procédé selon les revendications 1 à 12, **caractérisé en ce que** les matériaux de support sont revêtus, imprégnés, plaqués, expansés ou pulvérisés avec au moins un matériau polymère, puis durcis.

14. Matériaux composites absorbants, que l'on peut obtenir selon, un procédé de l'une quelconque des revendications 1 à 13.

15. Dispositif d'étanchéité, contenant, en plus d'au moins une bande étanche en matériaux synthétiques, au moins un matériau composite absorbant selon l'une quelconque des revendications 1 à 13.

16. Dispositif d'étanchéité selon la revendication 15, dans lequel le matériau composite absorbant est agencé entre deux bandes étanches en matériaux synthétiques.

17. Utilisation des matériaux composites absorbants selon la revendication 14, dans des matériaux d'étanchéité, dans des gainages de câble, pour augmenter la rétention d'eau dans les domaines de l'agriculture et du jardinage, pour réguler l'humidité de l'air dans des pièces et dans des récipients, ainsi que pour réguler l'humidité dans les sièges et les chaises longues.

18. Utilisation selon la revendication 17, dans des matériaux d'étanchéité pour la construction de routes, de tunnels et d'ouvrages hydrauliques, ainsi que pour les excavations, pour la protection contre les inondations et dans les systèmes d'étanchéité des toits.

**EP 1 713 853 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015102 A
- US 2160342 A
- DE 19930701 A
- DE 2819604 A
- DE 1223407 B
- EP 0269778 A
- DE 4243254 A
- DE 4306835 A
- DE 4316574 A
- DE 19521431 A
- US 5278217 A
- EP 0188091 A
- EP 0357474 A
- EP 0930078 A
- DE 10241530
- WO 9321237 A
- DE 2501123 A
- DE 19625245 A